Europäisches Patentamt

European Patent Office

Office européen des brevets

(11) Numéro de publication: **0 512 142 A1**

# DEMANDE DE BREVET EUROPEEN

(21) Numéro de dépôt: **91107462.3**

(51) Int. Cl.⁵: **A47J 31/40**

(22) Date de dépôt: **08.05.91**

(43) Date de publication de la demande:
**11.11.92 Bulletin 92/46**

(84) Etats contractants désignés:
**AT BE CH DE DK ES FR GB GR IT LI LU NL SE**

(71) Demandeur: **SOCIETE DES PRODUITS NESTLE S.A.**
**Case postale 353**
**CH-1800 Vevey(CH)**

(72) Inventeur: **Fond, Olivier**
**3, rue de la Villette**
**CH-1400 Yverdon(CH)**

(54) **Procédé d'extraction de cartouches fermées et dispositif pour sa mise en oeuvre.**

(57) Le dispositif comprend un organe d'injection d'eau (7), une cage de fixation (9) avec deux rampes de serrage (10) coaxiale avec l'organe d'injection d'eau, un support (15) de porte-cartouche avec deux pattes de serrage (17) diamètralement opposées et prévues pour s'engager sur les rampes de serrage de la cage de fixation et coaxialement avec l'organe d'injection d'eau une pièce annulaire (8) avec un logement intérieur dont la forme épouse sensiblement la forme extérieure de la cartouche à extraire et un porte-cartouche (11) disposé dans le support de porte-cartouche et comportant des éléments saillants (13) sur une grille d'écoulement (12), la partie inférieure de la pièce annulaire coopérant avec le pourtour du porte-cartouche pour assurer le maintien de la cartouche et l'étanchéité lors de l'extraction.

FIGURE 3

L'invention concerne un procédé d'extraction de cartouches fermées contenant du café torréfié et moulu dans un porte-cartouches, ladite cartouche ayant sensiblement la forme d'un tronc de cône, comprenant une face supérieure et une face inférieure de plus grand diamètre et constituant l'opercule. L'invention concerne en outre le dispositif pour la mise en oeuvre de ce procédé.

L'utilisation de capsules pour la préparation d'une boisson, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s'ouvrant sous l'effet de la pression d'eau injectée, répondent plus complètement aux arguments énoncés ci-dessus. Ces capsules se distinguent par leur système d'ouverture.

Certaines ont, par construction, des zones affaiblies qui se déchireront préférentiellement sous l'effet de la pression. Cette solution présente le désavantage d'augmenter la complexité et le prix de la capsule car les matières employées doivent être traitées de manière très précise pour que l'ouverture soit correcte et reproductible. De plus, elles doivent comporter un filtre voisin de la membrane, suffisamment résistant pour retenir le marc de café au cours de l'extraction.

D'autres sont employés selon un procédé dans lequel, dans un premier temps sont créées par action mécanique des zones d'affaiblissement dans la membrane inférieure, puis, dans un deuxième temps, l'ouverture de la capsule se fait sous l'action de la pression d'eau injectée par rupture des zones affaiblies. Un tel procédé, décrit dans les brevets FR 1537031 et FR 2033190, présente de nombreux désavantages.

Le dispositif est complexe à réaliser car le corps inférieur est pourvu d'une plaquette mobile, poussée par un ressort, pourvue d'une multitude de trous et de saillies, qui s'enfonce au fur et à mesure de la mise en place de la capsule afin de créer la cavité destinée à recevoir la capsule à extraire.

La formation de cette cavité est une opération délicate car elle est dépendante de la force du ressort; s'il est trop fort, la cavité sera trop petite et la capsule risque de s'ouvrir déjà complètement et s'il est trop faible, la cavité sera trop large, empêchant tout affaiblissement préalable de la membrane.

En conséquence, les deux actions principales, à savoir d'abord affaiblissement de la membrane par action mécanique puis ouverture de la capsule sont difficiles à contrôler.

De plus, les organes, destinés à affaiblir la membrane inférieure, sont des éléments taillants ou perforants qui peuvent être dangereux et blesser l'opérateur en cas de mauvaise manipulation.

Enfin, l'extraction de la capsule est effectuée sous pression, ce qui signifie que la pression maxima du fluide d'extraction n'est pas atteinte lors de l'ouverture de la capsule mais plus tard au cours de l'extraction lorsque la perte de charge à travers le lit de café a atteint son maximum.

Le but de la présente invention est de mettre au point un procédé et un dispositif dans lesquels tous les inconvénients mentionnés ci-dessus ont été éliminés et utilisables dans le cas de la préparation d'une boisson et, en particulier d'une extraction de café moulu sous pression, à partir d'une cartouche comportant une face supérieure et une face inférieure.

L'invention concerne un procédé dans lequel on injecte par la face supérieure de la cartouche un mélange d'eau et d'air à une pression comprise entre 1 et 10 bars, de manière à déformer la face inférieure de la capsule contre des éléments saillants du porte-cartouche, ladite face inférieure se déchirant à l'emplacement de cesdits éléments saillants en atteignant sa tension de rupture, pour permettre ensuite l'évacuation du liquide après extraction du café sous une pression de 1 à 15 bars.

Avant extraction, lorsqu'on pose la cartouche dans le porte-cartouche, sa face inférieure appuie sur les éléments saillants, eux-mêmes supportés sur une grille d'écoulement. Lors de l'injection d'eau dans la cartouche, sa face inférieure se plaque davantage contre les éléments saillants et la grille du fait de la montée en pression. La pression montant dans la cartouche, on arrive à l'ouverture de la cartouche dans les zones de contact de la face inférieure avec les éléments saillants lorsqu'on atteint la tension de rupture du matériau de ladite face inférieure.

La capsule est ouverte régulièrement par sa face inférieure mais, en aucun cas, le marc de café ne se disperse sur la grille d'écoulement ni ne peut passer à travers celle-ci jusque dans la tasse puisque ces orifices sont suffisamment petits pour faire office de filtre.

En effet, le marc de café ne peut se disperser sur la grille puisque la face inférieure se déforme préalablement en épousant la forme du dispositif d'extraction (grille avec éléments saillants) puis amorce sa déchirure en atteignant sa tension de rupture sur les éléments saillants. Les ouvertures réalisées sur la face inférieure représentent l'emplacement des éléments saillants mais vont aussi en partie d'un élément saillant à l'autre. De plus, la pression d'extraction pouvant être élevée, le marc est assez compacté, ce qui évite sa dispersion.

La cartouche est remplie d'une substance pour la préparation d'une boisson. Cette substance est de préférence du café torréfié et moulu, mais peut être aussi du thé, du café soluble, un mélange de café moulu et de café soluble ou un produit chocolaté.

La cartouche utilisée pour la mise en oeuvre du procédé selon l'invention peut être celle faisant l'objet de la demande de brevet européen déposée par la demanderesse, le même jour que la présente demande, sous le titre "Cartouche fermée pour la confection d'une boisson". Elle a un diamètre compris entre 2,5 et 6 cm et une épaisseur de lit de café comprise entre 10 et 25 mm. Comme le lit de café n'est pas très épais, il est préférable d'injecter l'eau sous la paroi supérieure de la cartouche vers le haut de manière à bien mouiller tout le lit de café.

L'invention concerne en outre le dispositif pour la mise en oeuvre du procédé. Ce dispositif comprend un organe d'injection d'eau, une cage de fixation avec deux rampes de serrage coaxiale avec l'organe d'injection d'eau, un support de porte-cartouches avec deux pattes de serrage diamètralement opposées et prévues pour s'engager sur les rampes de serrage de la cage de fixation, une pièce annulaire avec un logement intérieur dont la forme épouse sensiblement la forme extérieure de la cartouche à extraire, coaxialement avec l'organe d'injection d'eau et un porte-cartouche disposé dans le support de porte-cartouche et comportant des éléments saillants sur une grille d'écoulement, la partie inférieure de la pièce annulaire coopérant avec le pourtour du porte-cartouche pour assurer le maintien de la cartouche et l'étanchéité lors de l'extraction.

Le porte-cartouche est logé dans le support de porte-cartouche et l'ensemble avec la cartouche à extraire est mis en place par un mouvement vertical ascendant (ou descendant lors du changement de cartouche) pour obtenir l'étanchéité de la liaison porte-cartouche-cartouche-pièce annulaire creuse par écrasement de la bordure circulaire de la cartouche entre la partie inférieure de la pièce annulaire et le pourtour du porte-cartouche.

Les éléments saillants placés sur la grille d'écoulement sont saillants mais ni taillants ni perforants directement. Leur action de déchirure de la membrane inférieure de la capsule n'est rendue possible que parce qu'ils permettent à celle-ci d'atteindre sa tension de rupture lors de la déformation sous la poussée d'air et d'eau.

Les éléments sont disposés de telle manière qu'ils permettent à la matière de venir en contact avec la grille à l'endroit de la flèche de la déformation de la membrane. Comme les éléments sont moins contondants à leurs extrémités que sur leur partie centrale, ils amorcent la déchirure de la membrane. Cette déchirure se prolonge d'un élément à l'autre. La matière, ainsi libérée, peut alors venir parfaitement épouser la forme des éléments de la grille.

Ce déplacement permet un agrandissement de l'ouverture et favorise ainsi l'évacuation du liquide extrait à travers le lit de café, sans permettre une dispersion du marc en dehors de la capsule puisque celui-ci a été compacté préalablement sous l'effet de la pression d'eau.

Ces éléments sont constitués de petites baguettes rectilignes ou légèrement sinueuses ou sous forme d'arc, de section circulaire plus ou moins aplatie ou légèrement évasée vers le bas, disposées de façon radiale, concentrique, parallèle ou perpendiculaire sur la grille d'écoulement, et présentant des longueurs distinctes.

Leur section est semi-circulaire, plus ou moins aplatie, plus ou moins évasée vers le bas. Leur diamètre varie de 0,5 à 5 mm. La section peut aussi être conique ou troncconique. Leur nombre peut varier de 4 à 16, selon le diamètre de la grille.

La disposition de ces éléments saillants a été optimisée afin de permettre une répartition homogène des zones d'écoulement du café (meilleure irrigation, donc meilleure extraction du lit de café et meilleure qualité de l'extrait obtenu).

Dans le cas de la disposition radiale, ces éléments sont de longueur variable, selon leur position sur la grille (de 0,3 à 1,0 le diamètre de la grille) et selon le diamètre de la grille. Certains vont jusqu'au centre de la grille d'écoulement, d'autres s'arrêtent vers 3 à 8 mm de ce centre.

Cette disposition est justifiée par le fait que s'ils avaient tous la même longueur, ces éléments, en se réunissant au centre en étoile, formeraient un cercle plein qui gênerait l'ouverture correcte de la membrane dans cette zone centrale et qui de plus, ne permettrait pas une évacuation de l'extrait de café dans ladite zone.

Dans le cas de la disposition concentrique, parallèle ou perpendiculaire, la distance entre les éléments saillants est homogène dans les deux axes du plan horizontal. En aucun cas, des éléments ne peuvent se toucher ni se trouver à une distance inférieure à la distance minimum. En effet, si les éléments sont trop rapprochés, la matière ne peut se déformer correctement et venir épouser les formes du dispositif d'extraction. Il s'ensuit alors des risques de déplacement du marc de café depuis les ouvertures opérées dans la membrane jusque dans ces zones dites "mortes". lors de la déformation sous la poussée d'air et d'eau. Après extraction et dégagement du dispositif d'extraction, la capsule et sa face inférieure conservent leur parfaite intégrité grâce à la répartition des ouvertures. Aucun déchet de la face inférieure de la capsule ne reste accroché au dispositif d'extraction.

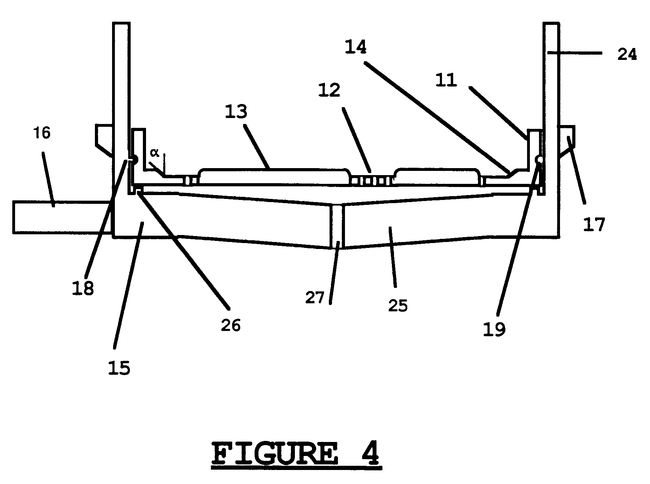

Comme déjà mentionné ci-dessus, la bordure circulaire de la cartouche est écrasée entre la partie inférieure de la pièce annulaire et le pourtour du porte-cartouche. Si cette bordure est assez épaisse, soit en raison de l'utilisation de matériaux eux-mêmes épais, soit en raison du sertissage de l'opercule, dans ce cas on atteint une étanchéité suffisante pour l'extraction du café. Par contre, si cette bordure est plus mince, il est nécessaire de prévoir sur le pourtour du porte-cartouche une bordure annulaire en biseau. La dénivellation entre le bas et le haut du biseau varie selon la nature de la matière employée pour la cartouche. Elle est de l'ordre de 1 à 2 mm si la bordure de la cartouche est fine (50 à 200 $\mu$m) et seulement 0,5 à 1,5 mm si la bordure est épaisse (0,5 à 1,2 mm). Le biseau fait un angle de 10 à 40° avec la verticale ($\alpha$ sur Fig. 4).

L'intégrité de la capsule n'est entamée ni au serrage ni au desserrage du porte-cartouche car il est constitué de 2 pièces principales pouvant entrer en rotation l'une par rapport à l'autre: le porte-cartouche proprement dit avec la grille d'écoulement et les éléments radiaux de déchirure, et son support avec poignée, orifice de sortie du café et deux pattes de serrage diamétralement opposées et prévues pour s'engager sur les rampes de serrage de la cage de fixation. Le support avec sa poignée subissent un mouvement rotatif ascendant ou descendant qui permettent le serrage ou desserrage de la capsule. Le porte-cartouche quant à lui, ne subit pas la rotation mais uniquement les mouvements ascendants ou descendants dès que ou tant que la cartouche adhère à la pièce annulaire creuse d'extraction.

Après l'extraction de la cartouche, pour faciliter le dégagement de ladite cartouche, il est prévu sur la partie extérieure de la pièce annulaire une bague maintenue par un ressort, la partie inférieure de ladite bague repoussant la bordure de la cartouche lorsqu'on dégage le porte-cartouche.

La grille d'écoulement est constituée d'une plaque métallique (aluminium ou acier inox) d'une épaisseur de 0,5 à 2,0 mm percée d'une multitude de trous d'un diamètre moyen de 0,2 à 0,5 mm. Son diamètre est fonction de celui de la face inférieure de la cartouche et peut varier de 20 à 55 mm.

L'extraction de ladite cartouche se déroule ainsi selon les séquences et conditions suivantes:
- mise en place dans le porte-cartouche avec face de grand diamètre en position inférieure, serrage du porte-cartouche (mouvement ascendant) et de son support (mouvement rotatif ascendant) entraînant le perçage de la face supérieure de la cartouche par l'organe d'injection d'eau et assurant l'étanchéité par écrasement de la bordure inférieure de la cartouche entre la partie inférieure extérieure du corps annulaire creux et la bordure annulaire biseauté du porte-cartouche
- injection d'eau dans la partie supérieure de la cartouche
- sous l'effet de la pression d'eau, déformation plastique de la face inférieure jusqu'à sa tension de rupture, entraînant de nombreuses ouvertures de celles-ci
- extraction de la cartouche

La suite de la description est faite en référence aux dessins sur lesquels:

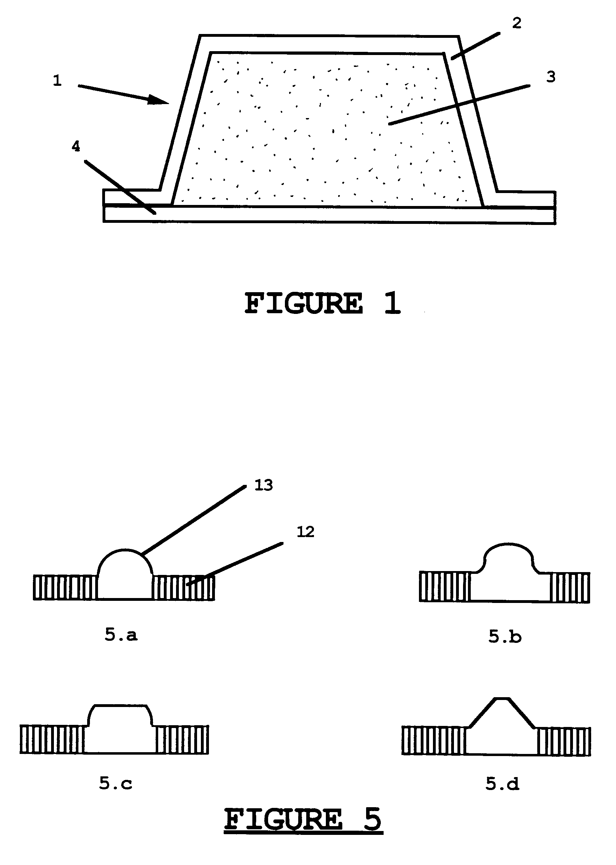

Fig. 1 est une représentation schématique de la cartouche à extraire,

Fig. 2 est une vue de dessus du porte-cartouche et de son support,

Fig. 3 est une coupe de la cartouche dans le dispositif d'extraction selon la ligne 3-3 de la Fig. 2,

Fig. 4 est une coupe du porte-cartouche et de son support selon la ligne 3-3 de la Fig. 2,

Fig. 5a à 5d sont des coupes des éléments radiaux selon la ligne 5-5 de la Fig. 2 et

Fig. 6 est une coupe de la cartouche dans le dispositif d'extraction, selon un second mode de réalisation.

La cartouche (1) comporte une coupelle (2) de forme tronconique, remplie de café torréfié et moulu (3) et fermée par un opercule (4) soudé sur le rebord de la coupelle (2) et formant la face inférieure.

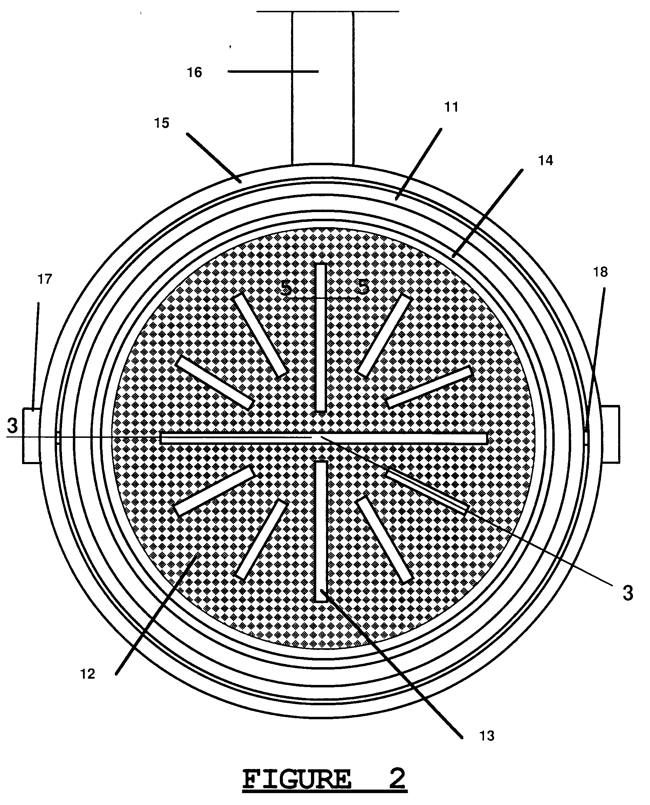

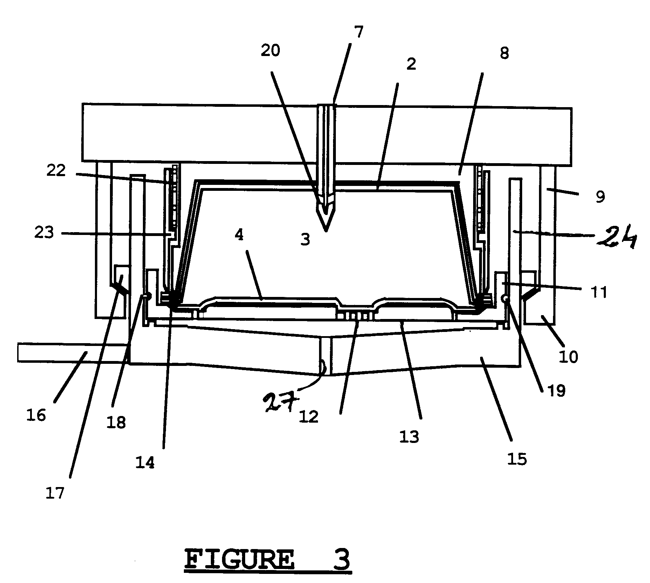

En référence aux Fig. 2 et 4, le porte-cartouche (11) est logé dans son support (15) comportant une poignée (16) et une paroi latérale (24) comportant deux pattes de serrage (17) diamètralement opposées et prévues pour s'engager sur les rampes de serrage (10) de la cage de fixation (9) (Fig. 3) et un alésage (27) pour le passage du café. Sur le fond (25) du support (24) est prévue une protubérance annulaire (26) sur laquelle repose le porte-cartouche (11) qui peut tourner dans son support grâce en outre aux deux ergots amovibles (18) coopérant avec la gorge (19) prévue dans ledit porte-cartouche. Le porte-cartouche (11) comporte une grille d'écoulement (12) avec des éléments saillants d'ouverture (13) et une bordure annulaire en biseau (14). Cette bordure fait un angle $\alpha$ avec la verticale.

En référence à la Fig. 3, le dispositif d'extraction comprend en outre un organe d'injection d'eau (7) percé d'orifices (20) orientés vers le haut et une pièce annulaire (8) avec un logement intérieur dont la forme épouse sensiblement la forme extérieure de la cartouche. La pièce annulaire (8) comprend sur sa partie extérieure un ressort (22) maintenant une bague (23) pour le dégagement de la cartouche en fin d'extraction.

Le fonctionnement du dispositif est le suivant: on dispose la cartouche (1) dans le porte-cartouche (11). On engage ensuite le support (15) par ses pattes de serrage (17) sur les rampes de serrage (10) de la cage de fixation (9). L'organe d'injection d'eau (7) perce la face supérieure de la coupelle (2). La face inférieure (4) de la cartouche appuie sur les éléments radiaux (13) du porte-cartouche. La possibilité de rotation du porte-cartouche (11) dans son support (15) permet lors de la pose de la cartouche que celle-ci reste fixe par rapport au porte-cartouche, évitant ainsi tout risque d'endommagement de ladite cartouche.

L'eau est ensuite introduite par les orifices (20) de l'organe d'injection d'eau (7) et passe sur le lit de café (3). La pression monte dans la cartouche et la face inférieure (4) épouse de mieux en mieux la forme des éléments radiaux d'ouverture (13). Lorsqu'on atteint la tension de rupture du matériau de la face inférieure, il y a déchirure de ladite face le long des éléments radiaux. Le café s'écoule à travers la grille d'écoulement (12) et est récupéré sous l'alésage (27) dans un récipient (non représenté).

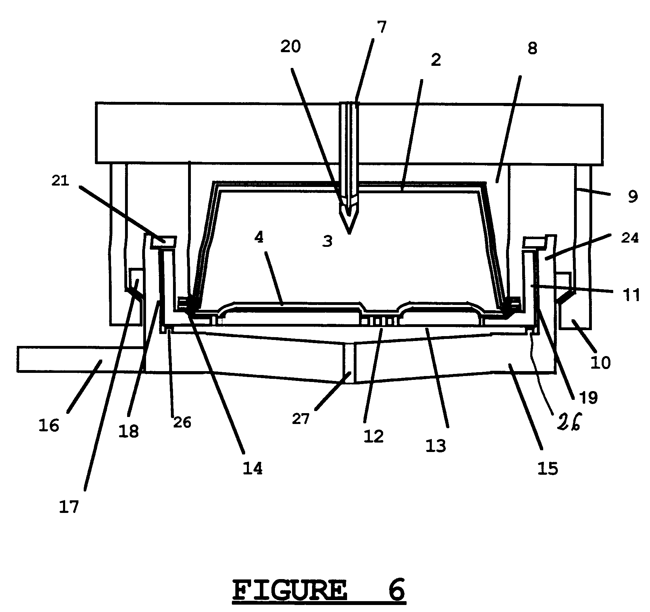

Les Fig. 5a à 5d montrent différentes sections des éléments radiaux (13). Sur la Fig. 6, les éléments identiques que ceux de la Fig. 3 ont été affectés des mêmes numéros de référence. Ce dispositif diffère de celui de la Fig. 3 uniquement sur les éléments participant à la mise en rotation du porte-cartouche (11) par rapport à son support (15). Le porte-cartouche est maintenu dans sa cavité de rotation à l'aide d'une bague (21), soudée ou sertie ou vissée sur le support après mise en place du porte-cartouche.

**Revendications**

1. Procédé d'extraction de cartouches fermées contenant du café torréfié et moulu dans un porte-cartouche, ladite cartouche ayant sensiblement la forme d'un tronc de cône, comprenant une face supérieure et une face inférieure de plus grand diamètre et constituant l'opercule, caractérisé en ce qu'on injecte par la face supérieure de la cartouche un mélange d'eau et d'air à une pression comprise entre 1 et 10 bars, de manière à déformer la face inférieure de la capsule contre des éléments saillants du porte-cartouche, ladite face inférieure se déchirant à l'emplacement de cesdits éléments saillants en atteignant sa tension de rupture, pour permettre ensuite l'évacuation du liquide après extraction du café sous une pression de 1 à 15 bars.

2. Procédé selon la revendication 1, caractérisé en ce qu'on effectue l'extraction sur une cartouche ayant un lit de café d'une épaisseur comprise entre 10 et 25 mm.

3. Procédé selon l'une des revendications 1 ou 2, caractérisé en ce qu'on injecte l'eau sous la face supérieure vers le haut de manière à bien mouiller tout le lit de café.

4. Dispositif pour la mise en oeuvre du procédé selon l'une des revendications 1 à 3, comprenant un organe d'injection d'eau, une cage de fixation avec deux rampes de serrage coaxiale avec l'organe d'injection d'eau et un support de porte-cartouche avec deux pattes de serrage diamètralement opposées et prévues pour s'engager sur les rampes de serrage de la cage de fixation, caractérisé en ce qu'il comprend coaxialement avec l'organe d'injection d'eau une pièce annulaire avec un logement intérieur dont la forme épouse sensiblement la forme extérieure de la cartouche à extraire et un porte-cartouche disposé dans le support de porte-cartouche et comportant des éléments saillants sur une grille d'écoulement, la partie inférieure de la pièce annulaire coopérant avec le pourtour du porte-cartouche pour assurer le maintien de la cartouche et l'étanchéité lors de l'extraction.

5. Dispositif selon la revendication 4, caractérisé en ce que le porte-cartouche comporte entre 4 et 16 éléments saillants de longueur variable rectilignes ou légèrement sinueuxsous forme d'arc.

6. Dispositif selon la revendication 5, caractérisé en ce que les éléments saillants sont disposés de façon radiale, concentrique, parallèle ou perpendiculaire.

7. Dispositif selon l'une des revendications 4 à 6, caractérisé en ce que la pièce annulaire comporte sur sa partie extérieure un ressort maintenant une bague pour le dégagement de la cartouche en fin d'extraction.

8. Dispositif selon l'une des revendications 4 à 7, caractérisé en ce que le porte-cartouche est monté à rotation dans son support.

9. Dispositif selon l'une des revendications 4 à 8, caractérisé en ce que les éléments saillants ont une section semi-circulaire, conique ou tronc-conique et un diamètre compris entre 0,5 et 5 mm.

10. Dispositif selon l'une des revendications 4 à 9, caractérisé en ce que la grille d'écoulement a des ouverture de diamètre compris entre 0,2 et 0,5 mm.

11. Dispositif selon l'une des revendications 4 à 9, caractérisé en ce que le pourtour du porte-cartouche comporte une bordure annulaire en biseau.

# FIGURE 1

5.a

5.b

5.c

5.d

# FIGURE 5

**FIGURE   2**

**FIGURE 3**

**FIGURE 4**

FIGURE 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 373 999 (SOCIETE DES PRODUITS NESTLE S.A)<br>* page 3, ligne 3 - page 4, ligne 5; figures * | 1,8 | A47J31/40 |
| A | FR-A-2 322 796 (MANARESI)<br>* page 3, ligne 12 - page 4, ligne 39; figures * | 1,5,6 | |
| D,A | FR-A-2 033 190 (FASANO)<br>* le document en entier * | 1 | |
| D,A | FR-A-1 537 031 (FASANO)<br>* le document en entier * | 1 | |
| A | EP-A-0 242 556 (SOCIETE DES PRODUITS NESTLE S.A)<br>* page 1, ligne 20 - page 4, ligne 16; figures * | 1,3,7 | |
| A | US-A-4 921 712 (MALMQUIST)<br>* colonne 4, ligne 2 - ligne 29; figures 1,2 * | 5,6,9 | |
| A | DE-U-8 908 315 (WIESNER)<br>* page 15, ligne 19 - page 16, ligne 24; figures 1,2,4 * | 5,6,9,10 | |
| | | | **DOMAINES TECHNIQUES RECHERCHES (Int. Cl.5 )** |
| A | EP-A-0 070 403 (ILLYCAFE S.P.A.)<br>* page 3, ligne 6 - page 4, ligne 14; figure 2 * | 4,8,11 | A47J<br>B65D |

Le présent rapport a été établi pour toutes les revendications

| Lieu de la recherche | Date d'achèvement de la recherche | Examinateur |
|---|---|---|
| LA HAYE | 23 JANVIER 1992 | BODART P. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
..............................................................
& : membre de la même famille, document correspondant

EPO FORM 1503 03.82 (P0402)